# EUROPÄISCHE PATENTANMELDUNG

(11) **EP 1 167 131 A1**
(43) Veröffentlichungstag der Anmeldung: **02.01.2002**
(21) Anmeldenummer: 01113479.8
(22) Anmeldetag: 02.06.2001
(51) Int. Cl.: B60R 21/20

(54) **Abdeckung für den Beifahrer-Airbag**

(30) Priorität: 01.07.2000 DE 10032104
(71) Anmelder: Bayerische Motoren Werke Aktiengesellschaft, 80809 München (DE)
(72) Erfinder: Stavermann, Joerg Ruediger, 80331 München (DE)

(57) **Zusammenfassung**

Die Erfindung betrifft eine Abdeckung für den Beifahrer-Airbag, die in die Instrumententafel eines Personenkraftwagens integriert ist, wobei die Instrumententafel aus einem formstabilen Einleger, einer geschäumten Schicht (11) und einer Außenhaut (12) besteht, die einstückig miteinander verbunden sind und wobei ein den Airbag (16) verdeckender Bereich des Einlegers mit dem übrigen Bereich lösbar verbunden ist. Der Einleger ist in einen Basisträger (13) mit einer Öffnung für das Airbagmodul (16) und in ein diese Öffnung verschließendes Verschlußteil (14) unterteilt, das mit dem Basisträger (13) durch zerstörbare Befestigungsmittel (15) verbunden ist. Das Verschlußteil (14) ist mit Mitteln (18) zur gelenkigen Verbindung mit dem Airbagmodul (16) versehen. Nach erfolgtem Einbau der Instrumententafel in das Fahrzeug ist das Airbagmodul (16) an einem Strukturelement (21) des Fahrzeugs befestigbar.

## Beschreibung

Die Erfindung betrifft eine Abdeckung für den Beifahrer-Airbag, die in die Instrumententafel eines Personenkraftwagens integriert ist, wobei die Instrumententafel aus einem formstabilen Einleger, einer geschäumten Schicht und einer Außenhaut besteht, die einstückig miteinander verbunden sind und wobei ein den Airbag verdeckender Bereich des Einlegers mit dem übrigen Bereich lösbar verbunden ist.

In Personenkraftwagen, die mit einem Beifahrer-Airbag ausgerüstet sind, sollte die Instrumententafel so ausgebildet sein, daß sie das Airbagmodul verbirgt, daß aber andererseits eine Öffnung gebildet wird, durch die der Luftsack in den Fahrgastraum austreten kann, wenn das Airgabmodul ausgelöst wird, Bei den bekannten Instrumententafeln ist der Einleger einstückig ausgebildet, wobei der den Airbag verdeckende Bereich des Einlegers von dem übrigen Bereich durch eine Schwächungslinie, beispielsweise eine Perforation oder dergleichen, getrennt ist. Wenn das Airbagmodul ausgelöst, d. h. der Gasgenerator gezündet wird, dann bricht diese Schwächungslinie unter der von dem Luftsack auf den Einleger ausgeübten Druckkraft. Die Instrumententafel reißt daher auf, so daß der Luftsack zum Schutz des Beifahrers in den Fahrgastraum austreten kann. Damit der von der Instrumententafel abgetrennte Bereich nicht frei umherfliegen kann, muß er mit dem übrigen Bereich in geeigneter Weise, beispielsweise durch ein Fangband, verbunden sein. Nach dem Stand der Technik wird das Airbagmodul entweder in der Instrumententafel vormontiert, oder es wird mit der Fahrzeugstruktur verbunden. Die erste Variante ist mit dem Nachteil behaftet, daß die Instrumententafel wegen des Eigengewichtes des Airbagmoduls verstärkt werden muß. Die Instrumententafel muß auch so ausgebildet sein, daß sie die beim Zünden des Gasgenerators auftretenden Reaktionskräfte aufnehmen kann. Die zweite Variante bietet zwar den Vorteil, daß die Instrumententafel keine von dem Airbagmodul herrührenden Kräfte aufnehmen muß, sie ist aber mit dem Nachteil behaftet, daß Einschränkungen hinsichtlich der Montage und der Befestigung der Instrumententafel berücksichtigt werden müssen. Es ist auch bereits eine Kombination dieser beiden Varianten bekannt, bei der das Airbagmodul sowohl mit der Instrumententafel als auch mit Strukturelementen des Fahrzeugs verbunden ist. Dies geschieht in der Regel über Hilfsrahmen, die aber zumeist sehr aufwendig sind.

Der Erfindung liegt die Aufgabe zugrunde, eine gattungsgemäße Abdeckung zu schaffen die eine einfache Ausbildung und rasche Montage der Instrumententafel ermöglicht, und bei der Reaktionaskräfte des Airbagmoduls überwiegend in die Fahrzeugstruktur eingeleitet werden.

Erfindungsgemäß wird diese Aufgabe dadurch gelöst, daß der Einleger in einen Basisträger mit einer Öffnung für das Airbagmodul und in ein diese Öffnung verschließendes Verschlußteil unterteilt ist, daß das Verschlußteil mit dem Basisträger durch zerstörbare Befestigungsmittel verbunden ist, daß das Verschlußteil mit Mitteln zur gelenkigen Verbindung mit dem Airbagmodul versehen ist, und daß das Airbagmodul nach erfolgtem Einbau der Instrumententafel in das Fahrzeug an einem Strukturelement des Fahrzeugs befestigbar ist.

Diese Ausbildung der Abdeckung ermöglicht eine einfache Herstellbarkeit, wobei der Basisträger und das Verschlußteil aus verschiedenen, den jeweiligen Anforderungen entsprechenden Materialien gefertigt sein können. Dabei ist eine Nachbearbeitung des Einlegers zur Darstellung der Austrittsöffnung für den Airbag entbehrlich. Die Größe der Austrittsöffnung kann auf ein Minimum reduziert werden, womit auch die Energie des Verschlußteils bei einer Auslösung des Airbags reduziert wird. Dabei werden die Reaktionskräfte überwiegend in die Fahrzeugstruktur eingeleitet, so daß die Instrumententafel nicht verstärkt werden muß. Die Begrenzung des Öffnungswinkels des Verschlußteils ist ohne zusätzliche Montageelemente möglich. Die erfindungsgemäße Abdeckung erfordert keinen aufwendigen Hilfsrahmen und kein Fangband, und sie kann sowohl bei Aufreißlösungen als auch bei konventionellen Airbagabdeckungen verwendet werden.

Die zerstörbaren Befestigungselemente zur Verbindung des Verschlußteils mit dem Basisträger sind vorzugsweise von Abreißschrauben gebildet.

Bei einer in konstruktiver Hinsicht besonders vorteilhaften Ausführungsform ist vorgesehen, daß das Verschlußteil nahe einer Längsseite eine oder mehrere miteinander fluchtende Öffnungen zur Aufnahme eines Gelenkbolzens aufweist, und daß das Airbagmodul mit Haltern versehen ist, die gleichfalls Öffnungen zur Aufnahme des Gelenkbolzens aufweisen. Um eine flächige Anlage des Airbagmoduls an dem entsprechenden Strukturelement des Fahrzeugs auch bei Toleranzen der verschiedenen Bauteile zu ermöglichen, ist vorgesehen, daß die in den Haltern des Airbagmoduls ausgebildeten Öffnungen eine größeren Durchmesser haben als der Gelenkbolzen.

Um ein unkontrolliertes Pendeln des vormontierten Airbagmoduls beim Einbau der Instrumententafel in das Fahrzeug zu vermeiden, ist vorgesehen, daß der Basisträger einen die Verschwenkbarkeit des Airbagmoduls begrenzenden Anschlag aufweist.

Das Airbagmodul weist vorzugsweise einen den Öffnungswinkel des Verschlußteils begrenzenden Anschlag auf.

Ein Ausführungsbeispiel der Erfindung ist in den Zeichnungen dargestellt und wird nachfolgend näher erläutert. Es zeigt:
Fig. 1 einen Querschnitt durch die Instrumententafel eines Personenkraftwagens mit Beifahrer-Airbag im Einbauzustand, und
Fig. 2 eine Darstellung ähnlich wie Fig. 1, die aber den Zustand nach dem Auslösen des Airbags zeigt.

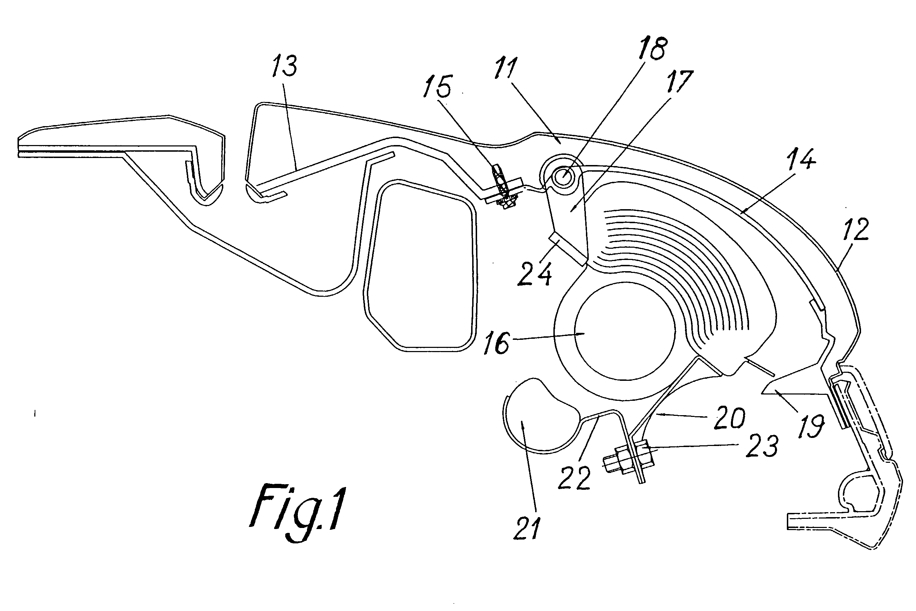

Fig. 1 zeigt einen parallel zur Längsachse eines Personenkraftwagens gelegten Schnitt durch die Instrumententafel. Die Instrumententafel besteht in bekannter Weise aus einem Einleger, einer geschäumten Schicht 11 und einer Außenhaut 12, die einstückig miteinander verbunden sind. Der Einleger ist in einen Basisträger 13 und in ein Verschlußteil 14 unterteilt. Das Verschlußteil 14 verschließt eine in dem Basisträger 13 ausgebildete Öffnung. Das Verschlußteil 14 liegt im Randbereich der Öffnung auf dem Basisträger 13 auf, aber es untergreift diesen an einem Längsrand, wo es mit dem Basisträger 13 durch mehrere Abreißschrauben 15 verbunden ist. Das Verschlußteil 14 ist nahe diesem Längsrand mit einem zu diesem parallelen Kanal versehen, dessen Zweck nachfolgend noch erläutert wird. Nach der Befestigung des Verschlußteils 14 an dem Basisträger 13 wird die geschäumte Schicht 11 und anschließend die Außenhaut 12 angebracht, um die Instrumententafel zu komplettieren.

Mit dem Bezugszeichen 16 ist ein Airbagmodul bezeichnet, das in bekannter Weise ein Gehäuse, einen Gasgenerator, einen zusammengefalteten Luftsack und eine Abdeckung umfaßt. Am Gehäuse des Airbagmoduls 16 sind zwei Halter 17 befestigt oder mit diesem integriert, die jeweils eine Öffnung haben, deren Durchmesser etwas größer ist als derjenige des in dem Verschlußteil 14 ausgebildeten Kanals. Das Airbagmodul 16 wird an der Instrumententafel vormontiert, bevor diese in das Fahrzeug eingebaut wird. Zu diesem Zweck werden die Öffnungen der beiden Halter 17 mit dem Kanal des Verschlußteils 14 zur Deckung gebracht, und es wird ein Gelenkbolzen 18 in den so gebildeten Hohlraum eingesetzt. Das Airbagmodul 16 ist somit mit dem Verschlußteil 14 und damit mit der Instrumententafel gelenkig verbunden. Um ein unkontrolliertes Pendeln des Airbagmoduls 16 nach der Vormontage in der Instrumententafel zu vermeiden, kann es sich an einem am Basisträger 13 ausgebildeten nasenförmigen Anschlag 19 abstützen. Das Airbagmodul 16 ist ferner auf seiner den Haltern 17 gegenüberliegenden Seite mit einer oder mehreren Laschen 20 versehen. Ein im Abstand unter der Instrumententafel verlaufendes Tragrohr 21, das einen Teil der Karosserie des Fahrzeugs bildet, ist ebenfalls mit einer oder mehreren Laschen 22 versehen.

Wenn die vormontierte Instrumententafel in das Fahrzeug geschoben wird, dann verdreht sich das Airbagmodul 16 um die von dem Gelenkbolzen 18 gebildete Achse, bis seine Laschen 20 an den Laschen 22 des Tragrohres 21 flächig anliegen. Daraufhin werden die Laschen 20 und 22 mit Schrauben 23 verbunden. Um die flächige Anlage zwischen den Laschen 20 und 22 zu gewährleisten, haben die Öffnungen in den Haltern 17 einen größeren Durchmesser als der Kanal in dem Abschlußteil 14.

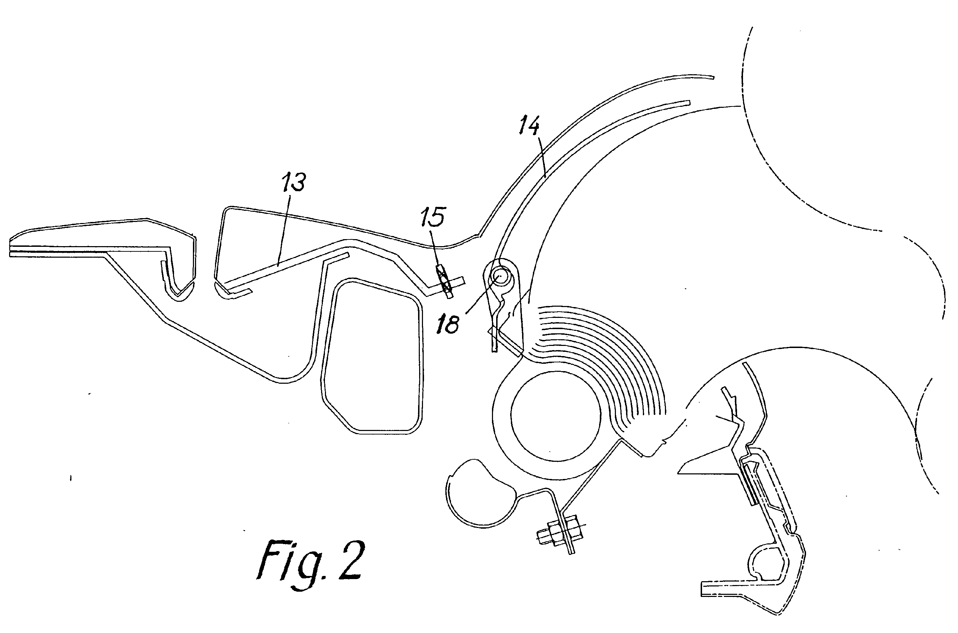

Wenn bei einem Aufprall des Fahrzeugs das Airbagmodul 16 ausgelöst wird, d. h. der Gasgenerator gezündet wird, dann drückt der Luftsack bei seiner Entfaltung auf das Verschlußteil 14. Die Abreißschrauben 15 sind so dimensioniert, daß sie unter der von dem Luftsack ausgeübten Kraft abreißen, so daß das Verschlußteil 14 um den in den Haltern 17 geführten Gelenkbolzen 18 eine Schwenkbewegung ausführen kann. Bei dieser Verschwenkung des Verschlußteils 14 werden die geschäumte Schicht 11 und die Außenhaut 12 aufgerissen. Dieser Vorgang kann dadurch erleichtert werden, indem die geschäumte Schicht 11 im Umfangsbereich des Verschlußteils 14 ganz oder teilweise eingeschnitten ist. Wie aus Fig. 2 hervorgeht, gelangt das Verschlußteil 14 mit seinem ursprünglich von den Abreißschrauben 15 gehaltenen Längsrand an zwei von den Haltern 17 gebildete Anschlägen 24 zur Anlage. Durch diese Anschläge 24 wird womit der Öffnungswinkel des aufgerissenen Teils der Instrumententafel begrenzt. Durch die dadurch gebildete Öffnung kann sich der Luftsack sodann in den Innenraum des Fahrzeugs entfalten, um den Beifahrer zu schützen. Die bei der Entfaltung des Luftsackes auftretenden Reaktionskräfte werden überwiegend von dem Airbagmodul 16 über die Laschen 22 in das Tragrohr 21 des Kraftfahrzeugs eingeleitet.

### Bezugszeichenliste:

- 11: geschäumte Schicht
- 12: Außenhaut
- 13: Basisträger
- 14: Verschlußteil
- 15: Abreißschrauben
- 16: Airbagmodul
- 17: Halter
- 18: Gelenkbolzen
- 19: Anschlag an 13
- 20: Laschen an 16
- 21: Tragrohr
- 22: Laschen an 21
- 23: Schrauben
- 24: Anschlag an 17

## Patentansprüche

1. Abdeckung für den Beifahrer-Airbag, die in die Instrumententafel eines Personenkraftwagens integriert ist, wobei die Instrumententafel aus einem formstabilen Einleger, einer geschäumten Schicht und einer Außenhaut besteht, die einstückig miteinander verbunden sind und wobei ein den Airbag verdeckender Bereich des Einlegers mit dem übrigen Bereich lösbar verbunden ist, **dadurch gekennzeichnet, daß** der Einleger in einen Basisträger (13) mit einer Öffnung für das Airbagmodul (16) und in ein diese Öffnung verschließendes Verschlußteil (14) unterteilt ist, daß das Verschlußteil (14) mit dem Basisträger (13) durch zerstörbare Befestigungsmittel (15) verbunden ist, daß das Verschlußteil (14) mit Mitteln (18) zur gelenkigen Verbindung mit dem Airbagmodul (16) versehen ist, und daß das Airbagmodul (16) nach erfolgtem Einbau der Instrumententafel in das Fahrzeug an einem Strukturelement (21) des Fahrzeugs befestigbar ist.

2. Abdeckung nach Anspruch 1, **dadurch gekennzeichnet, daß** die zerstörbaren Befestigungselemente von Abreißschrauben (15) gebildet sind.

3. Abdeckung nach Anspruch 1 oder 2, **dadurch gekennzeichnet, daß** das Verschlußteil (14) nahe einer Längsseite eine oder mehrere miteinander fluchtende Öffnungen zur Aufnahme eines Gelenkbolzens (18) aufweist, und daß das Airbagmodul (16) mit Haltern (17) versehen ist, die Öffnungen zur Aufnahme des Gelenkbolzens aufweist.

4. Abdeckung nach Anspruch 3, **dadurch gekennzeichnet, daß** die in den Haltern (17) des Airbagmoduls (16) ausgebildeten Öffnungen einen größeren Durchmesser haben als der Gelenkbolzen (18).

5. Abdeckung nach einem der vorhergehenden Ansprüche, **dadurch gekennzeichnet, daß** der Basisträger (13) einen die Verschwenkbarkeit des Airbagmoduls (16) begrenzenden Anschlag (19) aufweist.

6. Abdeckung nach einem der vorhergehenden Ansprüche, **dadurch gekennzeichnet, daß** das Airbagmodul (16) einen den Öffnungswinkel des Verschlußteils (14) begrenzenden Anschlag (24) aufweist.
